# EUROPEAN PATENT SPECIFICATION

(11) **EP 2 149 766 B1**
(45) Date of publication and mention of the grant of the patent: **13.02.2019**
(21) Application number: 09009820.3
(22) Date of filing: 29.07.2009
(51) Int. Cl.: F25B 30/06

(54) **Multifunctional waste water and ground source heat pump system**
Multifunktionsabwasser und Bodenquellenwärmepumpensystem
Système de pompe à chaleur multifonctions géothermique et pour eaux usées

(30) Priority: 31.07.2008 EE 200800077 U
(43) Date of publication of application: 03.02.2010
(73) Proprietor: AS Amhold, 10615 Tallinn (EE)
(72) Inventor: Mägi Arvu, 13918 Tallinn EE (EE)
(74) Representative: Koitel, Raivo

(56) References cited:
- WO-A1-03/074952
- WO-A1-2006/008433
- DE-A1-102005 059 942

## Description

### Technical field

The invention belongs to the field of heat and power engineering and handles a multifunctional waste water and ground source heat pump system.

### Prior art

The implementation and development of heat pumps is closely related to the rise in energy prices on the world market. A heat pump is an energetic device using the solar energy stored in the surrounding environment for the production of heat. In a heat pump, the ambient air, air from the ventilation, ground or waste water heat can be used by transforming it into a heating source for living spaces and hot water. The technical and economic efficiency of a heat pump depends on the features of the heat source.

Well known is a solution where the heat from the ground is collected via plastic pipes installed in the soil, i.e., a ground collector. The heat transferred to the heat-carrying agent is collected by the heat pump. The efficiency of a ground source heat pump is quite high as under the ground where the heat is sourced the temperature is stable both in winter and in summer (http://kokkuhoid.energia.ee). A disadvantage of ground source heat pumps is a relatively great need for land, a relatively small temperature difference, and a relatively low heat transfer factor of soil.

The heat energy needed for heating can also be obtained from water. In a known solution, the heat of waste air of waste water pipes is transferred into heat used for heating dwellings. The waste air of household soil pipes of a house is used via a heat exchanger having a suction pipe, whereby the waste air energy is transferred by a heat pump into heat energy (DE102005059942, Prinzing Georg GmbH Co KG, published on 14 June 2007).

Known is a heat pump (UA7971U, A. Glikson et al, published on 15 July 2005) that is connected to the household water wastepipe and comprises heat exchangers for hot water and household water, heat pumps, circulators, as well as a hot water accumulation container and household water accumulation container.

The efficiency and output of using wastewater heat highly depends on the daily fluctuation in the volume of waste water - at night, usually there is no flow and at daytime, the rate of flow is cyclical.

In order to increase the effect of using heat energy, various heat pump systems have been developed where combinations of various heat pumps is used; in practice, the system includes several ground source heat pumps or an air-water heat pump and ground source heat pump, etc.

Known is a combined heat and/ or cooling system (US 2007/0205298A1, Harrison et al, published on 06 September 2007), where different energy sources are combined in a unitary system. The proposed system can include one or more heat pumps, a heat exchanger system, solar and/ or waste energy system, and transfer of heat into a building. These systems can be connected and controlled by using various pipeworks, pumps, valves, and drives. The solution has a complicated technology and is expensive to implement.

The presented multifunctional waste water and ground source pump system is by its technological nature most similar to the heat pump system (KR 20040106826, Choi Byong Youn, HPSYSTEM TEHC CO LTD, published on 18 December 2004) where both ground heat and waste heat are used. The heat pump system comprises a regenerative part of waste heat, in order to regenerate waste heat from the waste water container by using a heat exchanger, and use the waste heat as a heat source for heating water for the evaporator of the heat pump. The ground heat exchanger has an underground pipework and a heat pump evaporator for heating water. The first triple valve is connected to the inputs of the evaporator of the regenerative part and the heat exchanger of the ground source heat pump, the other triple valve is connected to evaporator outputs. Implementing this solution has a low heat pump efficiency factor and a low output.

### Description of the invention

The purpose of the presented solution is developing a multifunctional waste water and ground source heat pump system that, when implemented, helps reducing the area of ground heat collector and increasing the water temperature in utility systems. The solution comprises a sewage system, a waste water treatment unit, an inspection manhole for treated waste water, an accumulation container, heat exchangers, heat pumps, a heating, hot water and cooling system, whereby the accumulation container equalizes the daily cyclic flow rates of waste water and the heat pump can be exactly dimensioned to the average daily waste water amount, thus enabling a reduction in the area of ground heat collector and an increase in water temperature in utility systems, as well as an increase in the efficiency factor of the heat pump and the amount of transferred heat energy.

### List of figures

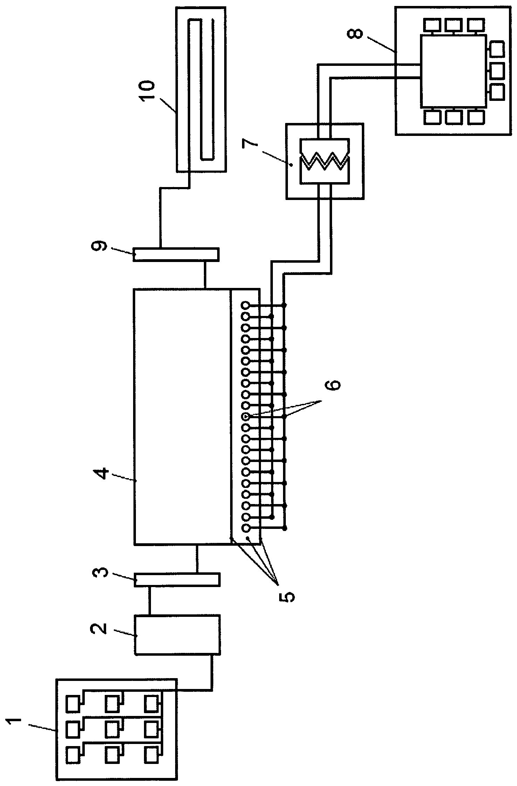

On the figure, a multifunctional waste water and ground source heat pump system is presented.

### Embodiment of the invention

The invention is implemented by using a system of multifunctional heat pumps including a waste water sewage system 1, a waste water treatment unit 2, an inspection manhole for treated waste water 3, an accumulation container (water reservoir) 4, a system for adjusting water draining into ground 5, a ground collector (heat exchanger) 6, a heat pump 7, heating, hot water and cooling systems 8, a water point for fire fighting and irrigation of plants 9, as well as an overflow system 10 for adjusting water level in the accumulation container.

The multifunctional waste water and ground source heat pump system is functioning as follows: hot waste water (showers, sinks, kitchens, sewage, etc., i.e., the household and waste water system 1) is treated in the waste water treatment unit 2. Solid residues are collected into a separate container and the treated waste water is directed to the inspection manhole 3 from where it is directed to the accumulation container 4. Under the accumulation container 4, a system 5 adjusting the draining of water into ground depending on draining properties of the natural subsoil. On the bottom of the accumulation container, a ground collector 6 of the ground source and waste water heat pump is installed, where the heat-carrying agent is circulated and that is heated by the heat transferred to the soil under and at sides of the accumulation container as well as by waste water heat. In the heat pump 7, the heat is transferred to heating, hot water and cooling systems 8. The accumulation container is connected to the water point 9 used for external and internal fire fighting water and irrigation of plants. Depending on the draining properties of the soil under the accumulation container, the cooled and treated waste water is directed to the storm water gully system by using an overflow system 10. An accumulation container can be a pond or a closed container. The adjustment system for draining water into ground is a clay and sand mixture surrounded by geotextile.

An advantage of the presented multifunctional waste water and ground source heat pump system is the accumulation container that equalizes the daily cyclic flow rates, and the heat pump can be exactly dimensioned to the daily waste water amount, which is a relatively constant indicator. At the same time, the waste water temperature is higher than the ground temperature, especially in winter, which allows to decrease the area of the ground heat collector and increase water temperature in utility systems, which increases the efficiency factor of the heat pump and the amount of heat energy transferred. Additionally, the water drained through the bottom and sides of the accumulation container considerably increases the heat transfer coefficient of the ground surrounding the ground collector under the container, which increases the efficiency factor of the heat pump. The water in the accumulation container is additionally used as fire fighting and irrigation water. The accumulation container can be designed as a pond with water plants and animals. Also, the accumulation container can be isolated, covered with plants, or buildings or structures can be built on it. Thus, the accumulation container fulfils multifunctional tasks, thus optimising building and application costs.

## Claims

1. A multifunctional waste water and ground source heat pump system comprising: a household waste water sewage system (1) having a waste water container, a waste water treatment unit (2) for collecting solid residues, an inspection manhole (3) for treated waste water, an accumulation container (4) for storing treated waste water and having under it a system (5) for adjusting water draining into ground, wherein said system is a clay and sand mixture surrounded by geotextile, a ground collector (6) installed on the bottom of the accumulation container (4), wherein a heat-carrying agent is circulated and heated by the heat transferred to the soil under and at sides of the accumulation container as well as by waste water heat, a heat pump (7) for transferring the heat from the ground collector to a heating, hot water and cooling system (8), a water point (9) connected to the accumulation container for fire fighting and irrigation of plants, and an overflow system (10) for adjusting water level in the accumulation container by directing treated waste water to a storm water gully system.

2. A system according to claim 1, wherein the accumulation container (4) is a pond or a closed container.

## Patentansprüche

1. Multifunktionsabwasser- und Bodenquellenwärmepumpensystem, enthält aus einem Haushaltsabwasserkanalsystem (1) mit einem Abwasserbehälter, einer Abwasserbehandlungseinheit (2) zum Sammeln von festen Rückständen, einem Inspektionsschacht (3) für behandeltes Abwasser, einem Sammelbehälter (4) zum Speichern von gereinigtem Abwasser und mit einem System (5) zum Einstellen des in den Boden abfließenden Wassers, wobei besagtes System eine von Geotextil umgebene Ton-Sand-Mischung ist, einem Bodenkollektor (6), der auf dem Boden des Sammelbehälters (4) installiert ist, wobei ein Wärmeträgermittel durch die auf das Erdreich unter und an den Seiten des Speicherbehälters übertragene Wärme sowie durch Abwasserwärme zirkuliert und erwärmt wird, eine Wärmepumpe (7) zum Übertragen der Wärme vom Erdkollektor auf ein Heizungs-, Warmwasser- und Kühlsystem (8), eine mit dem Speicherbehälter verbundene Wasserstelle (9) zur Brandbekämpfung und Bewässerung von Pflanzen und ein Überlaufsystem (10) zum Einstellen des Wasserstandes im Speicherbehälter durch Leiten des behandelten Abwassers zu einem Regenwasserkanalisationssystem.

2. System gemäß Patentanspruch 1, wobei der Sammelbehälter (4) ein Teich oder ein geschlossener Behälter ist.

## Revendications

1. Système de pompe à chaleur multifonctions et pour eaux usées et sources souterraines comprenant: un système d'assainissement des eaux usées ménagères (1) comportant un conteneur d'eaux usées, une unité de traitement des eaux usées (2) pour collecter les résidus solides, un trou d'homme pour l'inspection (3) des eaux usées traitées, un réservoir d'accumulation (4) pour stocker les eaux usées traitées et comportant un système (5) pour ajuster l'eau qui s'écoule dans le sol, ledit système étant un mélange d'argile et de sable entouré de géotextile, un collecteur de sol (6) installé sur le fond du récipient d'accumulation (4), dans lequel un agent caloporteur circule et est chauffé par la chaleur transférée au sol en-dessous et sur les côtés du récipient d'accumulation ainsi que par la chaleur des eaux usées, une pompe à chaleur (7) servant à transférer la chaleur émise par le collecteur de sol vers un système de chauffage, d'eau chaude et de refroidissement (8), un point d'eau (9) relié au réservoir d'accumulation pour la lutte contre l'incendie et l'irrigation des plantes, ainsi qu'un système de trop-plein (10) pour le réglage du niveau d'eau dans le conteneur d'accumulation en dirigeant les eaux usées traitées vers un système de ravinement des eaux pluviales.

2. Un système selon la revendication 1, dans lequel le réservoir d'accumulation (4) est un bassin ou un conteneur fermé.
